# EUROPEAN PATENT SPECIFICATION

(11) **EP 0 641 951 B1**
(45) Date of publication and mention of the grant of the patent: **19.11.1997**
(21) Application number: 94850155.6
(22) Date of filing: 07.09.1994
(51) Int. Cl.: F16D 65/10

(54) **Brake drum for a vehicle brake**
Bremstrommel für eine Fahrzeugbremse
Tambour de frein pour un frein de véhicule

(30) Priority: 08.09.1993 SE 9302905
(43) Date of publication of application: 08.03.1995
(73) Proprietor: AB VOLVO, 405 08 Göteborg (SE)
(72) Inventor: Fagergren, Mats, S-442 39 Kungälv (SE); Ohlsson, Rolf, S-440 41 No1 (SE)
(74) Representative: Hellbom, Lars Olof

(56) References cited:
- DE-C- 599 035
- GB-B- 387 933
- US-A- 2 897 925
- US-A- 3 147 828
- Patent Abstracts of Japan, vol. 8, no. 50(M-281); & JP-A-58203239 (TAKATSUGU NAKANO), 26-11-1983

## Description

The present invention relates to a brake drum for a vehicle brake, comprising a main portion with a cylindrical inner frictional surface, a radial flange portion with bores for receiving fastener elements for a wheel rim and an essentially conical transitional portion connecting the main portion to the flange portion. Such a brake drum is known e.g. from document US-3 147 828.

Brake drums of this type are used i.a. in drum brakes for heavy trucks. A number of different designs are known, most of which have in common that, depending on the circumstances, during braking they produce so-called braking vibrations.These disturbances are usually in the form of cab and/or steering wheel vibrations and can be quite troublesome to the driver. The problem of eliminating these vibrations has proved to be very difficult to solve.

In a known brake drum of the type described by way of introduction, which at times can produce such braking vibrations, the transitional portion between the main portion and the flange portion has approximately the same thickness along its entire axial extent. Its outer surfaces has a first inwardly inclined portion with a straight longitudinal profile going into the flange portion via a second inwardly inclined portion, also with an essentially straight longitudinal profile. The inner surface of the transitional portion consists of a first and a second cylindrical surface with an intermediate step.

The purpose of the present invention is to modify this known brake drum just described, so that the risk of braking vibrations will be eliminated or in any case be substantially reduced.

This is achieved according to the invention by virtue of the fact that the transitional portion has a first portion extending from the main portion and having converging inner and outer profiles, said transitional portion passing into the radial flange portion via a second portion with longitudinally outwardly curved outer and inner profiles, said transitional portion having a smallest thickness in said second portion.

The invention is based on theoretical studies and tests carried out, which have verified that the slight oval shape of the main portion of the brake drum which can arise when the drum is deformed when a non-planar or dirty wheel rim is mounted, is one of the parameters which can contribute to brake vibrations arising in the contact between the frictional surface of the brake drum and the brake shoes. By making the brake drum in the manner described above it has been shown that a large part of this force deformation can be absorbed in the transitional portion and thus not contribute to any deformation of the main portion of the drum thereby substantially reducing the risk of braking vibrations.

Tests performed have shown that the thickness of the brake drum in general has a great effekt on the braking vibrations. In a further development of the brake drum according to the invention, the flange portion has its maximum thickness in the rim contact zones around said bores and reduced thickness in the zones between at least certain bores. The reduction in the thickness of certain portions of the flange reduces the bending stiffness in the flange portions between the rim bolts, thus making it easier for the flange to absorb deformations and thereby prevent, together with the special design of the transitional portion, a non-planar or dirty rim from deforming the main portion of the brake drum. The reduced thickness in certain areas will also reduce the torque variations during braking at the same time as the drum will be somewhat lighter.

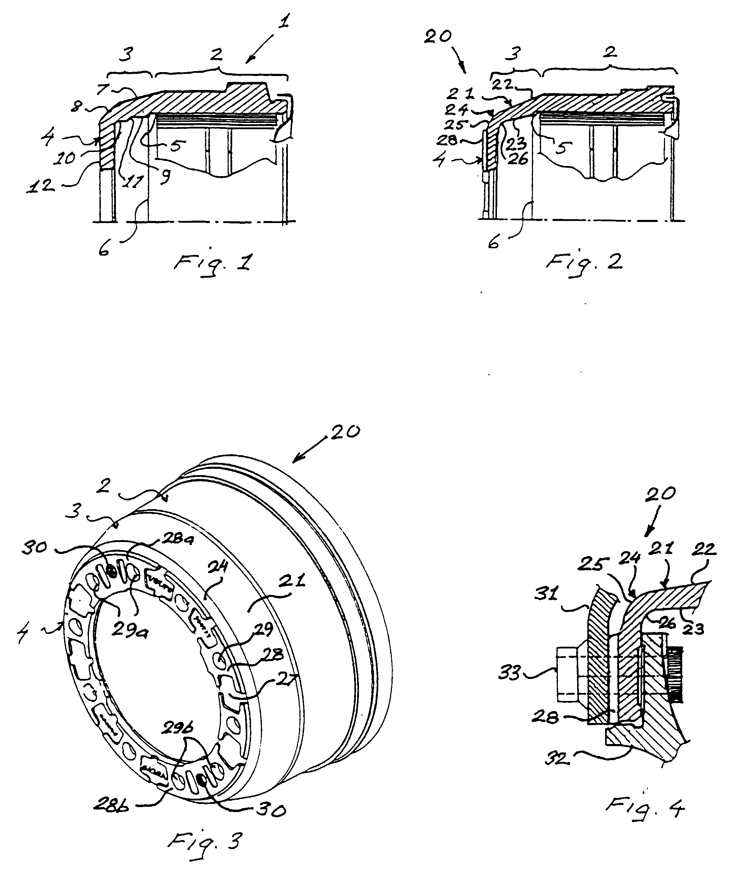

The invention will be described in more detail below with reference to examples shown in the accompanying drawings, where Fig. 1 shows a longitudinal section through a portion of the previously known brake drum,
Fig. 2 shows a longitudinal section corresponding to Fig. 1 through a portion of one embodiment of a brake drum according to the invention,
Fig. 3 is a perspective view of the brake drum in Fig. 2, and
Fig. 4 is a detail enlargement of the brake drum in Fig. 2 with a portion of a rim and a wheel hub.

The numeral 1 in Fig. 1 generally designates a previously known brake drum with a main portion 2, a transitional portion 3 and a rim flange 4. The main portion 2 has an inner cylindrical frictional surface 5, against which the brake shoes 6 (one shown) are pressed during braking.

The transitional portion 3 is limited on the outside by first and second conical surfaces 7 and 8, which form an angle with each other, and internally first and second cylindrical surfaces 9 and 10, which are separated by intermediate step 11. The portion 3 thus has essentially the same thickness at its transition to the main portion 2 as at the transition to the rim flange 4, which has a constant thickness and thus a completely planar outer surface 12 against which a wheel rim is bolted by means of bolts (not shown) achieved in the flange.

Fig. 2 shows an embodiment of a brake drum 20 according to the invention. The brake drum 20 is shown in the same scale as the drum 1 and is intended to be able to replace the drum 1 in a drum brake. As can be seen in the Figures the drum 20 has a smaller thickness in its main portion 2 than does the drum 1. However, a more essential difference lies in the design of the transitional portions 3.

According to the invention, the transitional portion 3 of the drum 20 is provided with a first portion 21, which is delimited by outer and inner conical surfaces 22 and 23 which converge towards each other, and a second portion 24 with arcuately curved outer and inner longitudinal profile 25 and 26, respectively. The second portion 24 forms a transition to the rim flange 4 and is the portion of the transitional portion 3 which has the smallest thickness. In view of the fact that the drums 1 and 20 are shown in the same scale it is clearly evident from Figs. 1 and 2 that the transitional portion 3 of the drum 20 is made weaker than the transitional portion 3 of the drum 1 and that the former has a substantially greater thickness in the transition to the main portion 2 than in the transition to the rim flange 4. The result of the described design of the transitional portion 3 of the drum 20 is that deformation caused by mounting a non-planar or dirty wheel rim is essentially taken up in the transitional portion 3.

An additional difference between the drum 1 and the drum 20 lies in the design of the wheel flange 4, which in the former has a constant thickness and an entirely planar outer surface 12, while the latter has a varying thickness due to an outer surface broken by the depressions 27, which are more clearly visible in Figs. 3 and 4. Between the depressions 27 the rim contact zone 28 is formed around bores 29 for rim bolts 30. In the example shown in Fig. 3, a pair of bores 29a has a common contact zone 28a and a pair of bores 29b has a common contact zone 28b. In the contact zones 28a and 28b there are bores 30 for guide pins (not shown). The shown "double T-shape" of the contact zones 28 between the depressions 27 has proved to provide optimum result as regards deformation on the drum and rim attachment thereto.

Fig. 3 shows a practical embodiment of a brake drum according to the invention in a reduced scale. The relationship, as can be seen in the Figure, between the dimesions of the drum 20, the depressions 27 and the contact zones 28 is thus according to scale.

Fig. 4 illustrates on an enlarged scale relative to Fig. 2 a brake drum 20 and a wheel rim 31 mounted on a wheel 32 by means of wheel bolts 33. As can be seen in the Figure, the outwardly curved portion 24 of the transitional portion 3 has a substantially smaller thickness than the area of the flange portion of maximum thickness, i.e. the areas with the contact zones 28.

## Claims

1. Brake drum for a vehicle brake, comprising a main portion with a cylindrical inner frictional surface, a radial flange portion with bores for receiving fastening elements for a wheel rim and an essentially conical transitional portion which connects the main portion with the flange portion, characterized in that the transitional portion (3) has a first portion (21) extending from the main portion and having converging inner and outer profiles (22,23), said transitional portion passing into the radial flange portion (4) via a second portion (24) with longitudinally arcuately curved outer and inner profiles (25,26), said transitional portion having a smallest thickness in said second portion.

2. Brake drum according to claim 1, characterized in that the thickness in the second portion (24) of the transitional portion (3) is less than the greatest thickness in the flange portion (4).

3. Brake drum according to claim 1 or 2, characterized in that the flange portion (4) has its maximum thickness in the rim contact zone (28) around said bores (29) and reduced thickness in zones (27) between at least certain bores.

## Patentansprüche

1. Bremstrommel für eine Fahrzeugbremse, umfassend einen Hauptabschnitt mit einer zylindrischen, inneren Reibfläche, einen radialen Flanschabschnitt mit Bohrungen zum Aufnehmen von Befestigungselementen für eine Felge und einen im wesentlichen konischen Übergangsabschnitt, der den Hauptabschnitt mit dem Flanschabschnitt verbindet, dadurch gekennzeichnet, daß der Übergangsabschnitt (3) einen ersten Bereich (21) aufweist, der sich von dem Hauptabschnitt erstreckt und konvergierende innere und äußere Profile (22, 23) aufweist, wobei der Übergangsabschnitt in den radialen Flanschabschnitt (4) durch einen zweiten Bereich (24) übergeht, der länglich und bogenförmig gekrümmte äußere und innere Profile (25, 26) aufweist, wobei der Übergangsabschnitt eine geringste Dicke in dem zweiten Bereich aufweist.

2. Bremstrommel nach Anspruch 1, dadurch gekennzeichnet, daß die Dicke in dem zweiten Bereich (24) des Übergangabschnitts (3) geringer ist als die größte Dicke in dem Flanschabschnitt.

3. Bremstrommel nach Anspruch 1 oder 2, dadurch gekennzeichnet, daß der Flanschabschnitt (4) seine größte Dicke in der Felgenberührzone (28) um die Bohrungen (29) und verringerte Dicke in Zonen (27) zwischen zumindest einigen Bohrungen aufweist.

## Revendications

1. Tambour de frein pour un frein de véhicule, comprenant une partie principale présentant une surface de friction intérieure cylindrique, une partie formant bride radiale présentant des trous pour recevoir des éléments de solidarisation pour une jante de roue et une partie de transition approximativement conique qui relie la partie principale à la partie formant bride, caractérisé en ce que la partie de transition (3) présente une première partie (21) s'étendant depuis la partie principale et ayant des profils (22, 23) extérieur et intérieur convergents, ladite partie de transition passant vers la partie formant bride (4) radiale par une seconde partie (24) présentant des profils (25, 26) extérieur et intérieur courbés en arc longitudinalement, ladite partie de transition ayant son épaisseur la plus faible dans ladite seconde partie.

2. Tambour de frein selon la revendication 1, caractérisé en ce que l'épaisseur dans la seconde partie (24) de la partie de transition (3) est moindre que l'épaisseur la plus grande dans la partie formant bride (4).

3. Tambour de frein selon la revendication 1 ou 2, caractérisé en ce que la partie formant bride (4) présente une épaisseur maximale dans la zone de contact (28) avec la jante autour desdits trous (29) et une épaisseur réduite dans des zones (27) entre au moins certains trous.
